# EUROPÄISCHE PATENTSCHRIFT

(11) **EP 4 146 487 B1**
(45) Veröffentlichungstag und Bekanntmachung des Hinweises auf die Patenterteilung: **06.05.2026**
(21) Anmeldenummer: 20820136.8
(22) Anmeldetag: 04.12.2020
(51) Int. Cl.: B60C 23/04

(54) **VERFAHREN UND SYSTEM ZUM NACHWEIS VON REIFENANOMALIEN**
METHOD AND SYSTEM FOR DETECTING TYRE ABNORMALITIES
PROCÉDÉ ET SYSTÈME POUR DÉTECTER DES ANOMALIES DE PNEU

(30) Priorität: 05.05.2020 DE 102020205658
(43) Veröffentlichungstag der Anmeldung: 15.03.2023
(73) Patentinhaber: Continental Reifen Deutschland GmbH, 30175 Hannover (DE)
(72) Erfinder: SAHLMÜLLER, Baldo, 30165 Hannover (DE); GLÄSER, Frank, 30165 Hannover (DE)
(74) Vertreter: Continental Corporation
(86) Internationale Anmeldenummer: PCT/EP2020/084715
(87) Internationale Veröffentlichungsnummer: WO 2021/223898

(56) Entgegenhaltungen:
- CN-B- 107 379 897
- US-B2- 7 242 285

## Beschreibung

Die Erfindung betrifft ein Verfahren und ein System.

Die Erfindung geht aus von einem Verfahren zum Nachweis von Reifenanomalien, aufweisend die folgenden Schritte:
- Bereitstellen eines Fahrzeugreifens;
- Bereitstellen einer Messvorrichtung, wobei die Messvorrichtung zur Messung einer Zustandsgröße des Fahrzeugreifens geeignet ist;
- Erfassen von Zeitintervallen in denen Messungen mittels der Messvorrichtung vorgenommen werden;
- Messen einer Zustandsgröße während der Zeitintervalle.

Bei einer Reifenanomalie handelt es sich beispielsweise um einen zu niedrigen Druck, der in einen Innenraum eines Fahrzeugreifens herrscht.

Aus dem Stand der Technik sind Verfahren bekannt, wobei die aus dem Stand der Technik bekannten Verfahren die zuvor benannten Schritte aufweisen.

Aus dem Stand der Technik sind insgesamt Verfahren zur Bestimmung eines Zustands eines Reifens bekannt, beispielsweise werden solche Verfahren in der US 7,242,285 B2 oder der CN 107379897 B offenbart.

Bei den aus dem Stand der Technik bekannten Verfahren werden die Messungen möglicherweise unregelmäßig während der Messintervalle vorgenommen. Eine Auswertung unregelmäßig vorgenommener Messungen könnte mit einem erhöhten Aufwand einhergehen. Die aus dem Stand der Technik bekannten Verfahren könnten daher nicht optimal ausgestaltet sein. Ferner könnte es lediglich anhand unregelmäßig vorgenommener Messungen mit einem hohen Aufwand verbunden sein, eine weitere zeitliche Entwicklung des Zustands des Fahrzeugreifens anhand der Messungen abzuschätzen. Der Zustand des Fahrzeugreifens hängt unmittelbar oder mittelbar von den Zustandsgrößen des Fahrzeugreifens ab.

Der Erfindung liegt daher die Aufgabe zugrunde, ein verbessertes Verfahren bereitzustellen, bei dem die Verarbeitung von Informationen über die Zustandsgrößen des Fahrzeugreifens einfacher ausgestaltet ist und mittels dem es insbesondere möglich ist, die zeitliche Entwicklung des Zustands des Fahrzeugreifens anhand der Messungen aufwandsgering und zuverlässig abzuschätzen.

Gelöst wird die gestellte Aufgabe dadurch, dass das Verfahren durch die weiteren Schritte gekennzeichnet ist:
- Zuordnen eines repräsentativen Wertes zu der gemessenen Zustandsgröße;
- Durchführen einer Zeitreihenanalyse der repräsentativen Werte.

Durch den erfindungsgemäßen Umstand, wonach das Verfahren durch die weiteren Schritte:
- Zuordnen eines repräsentativen Wertes zu der gemessenen Zustandsgröße;
- Durchführen einer Zeitreihenanalyse der repräsentativen Werte,
gekennzeichnet ist, werden, trotz gegebenenfalls unregelmäßig durchgeführter Messungen, verarbeitbare Daten in Form der repräsentativen Werte bereitgestellt. Die Zeitreihenanalyse der repräsentativen Werte ermöglicht darüber hinaus eine zuverlässige und im Vergleich zu dem Stand der Technik aufwandsgeringe Abschätzung der zeitlichen Entwicklung des Zustands des Fahrzeugreifens.

Somit wird ein verbessertes Verfahren bereitgestellt.

Die Erfindung betrifft ferner ein System zum Nachweis von Reifenanomalien, wobei das System zur Durchführung eines erfindungsgemäßen Verfahrens konfiguriert ist.

Weitere vorteilhafte Ausgestaltungsformen der vorliegenden Erfindung sind Gegenstand der Unteransprüche.

Gemäß einer vorzugsweisen Ausgestaltungsform des erfindungsgemäßen Verfahrens handelt es sich für den Fall, wonach mindestens zweimal oder mehrfach während eines Zeitintervalls die Zustandsgröße des Fahrzeugreifens gemessen wird, bei dem repräsentativen Wert um den Mittelwert der während eines Zeitintervalls gemessenen Zustandsgrößen oder um den Medianwert der während eines Zeitintervalls gemessenen Zustandsgrößen oder um den Minimalwert der während eines Zeitintervalls gemessenen Zustandsgrößen oder um den Maximalwert der während eines Zeitintervalls gemessenen Zustandsgrößen.

Durch den erfindungsgemäßen Umstand, wonach es sich bei dem repräsentativen Wert um den Medianwert der während eines Zeitintervalls gemessenen Zustandsgrößen handelt, kann eine Zeitreihenanalyse auf Grundlage eines tatsächlich gemessenen Wertes vorgenommen werden.

Erfindungsgemäß werden repräsentative Werte lediglich zu während eines Zeitunterintervalls gemessenen Zustandsgrößen zugeordnet. Bei dem Zeitunterintervall handelt es sich um ein innerhalb des Zeitintervalls liegendes inneres zeitliches Intervall.

Somit können beispielsweise zu Beginn eines Zeitintervalls gemessene Zustandsgrößen, die nicht in das Zeitunterintervall fallen, bei der Zuordnung der repräsentativen Werte unberücksichtigt bleiben.

Hintergrund ist, dass beispielsweise für den Fall, wonach als Zustandsgrößen Temperaturen und Drücke erfasst werden, ein Temperatursensor zu Beginn eines Zeitintervalls gegebenenfalls keine solchen Werte liefert, die zu den Werten korreliert sind, die mittels eines Drucksensors ermittelt werden.

Insbesondere bei temperaturabhängigen Messungen können somit gegebenenfalls fehlerhafte Werte bei der Bestimmung der Zustandsgrößen und damit auch bei der Zuordnung der repräsentativen Werte unberücksichtigt bleiben. Das Zeitunterintervall hängt mittelbar oder unmittelbar von den physikalischtechnischen Wirkprinzipien der Messvorrichtung ab.

Gemäß einer nächsten vorzugsweisen Ausgestaltungsform des erfindungsgemäßen Verfahrens werden für jedes Zeitintervall und jede Zustandsgröße mehrere der genannten repräsentativen Werte ermittelt.

Durch den erfindungsgemäßen Umstand, wonach für jedes Zeitintervall und jede Zustandsgröße mehrere der genannten repräsentativen Werte ermittelt werden, wird der Vorteil erzielt, dass auch die Verteilungsfunktion der zugrundeliegenden Messwerte durch die repräsentativen Werte in Grundzügen abgebildet werden kann.

Gemäß einer nächsten vorzugsweisen Ausgestaltungsform des erfindungsgemäßen Verfahrens hat das Zeitintervall eine Länge von einer Stunde bis zu 24 Stunden.

Gemäß einer nächsten vorzugsweisen Ausgestaltungsform des erfindungsgemäßen Verfahrens wird der repräsentative Wert mit einem Schwellenwert verglichen, wobei in Abhängigkeit des Vergleichs ein elektronisch verarbeitbares Signal erzeugt wird.

Durch den erfindungsgemäßen Umstand, wonach der repräsentative Wert mit einem Schwellenwert verglichen wird, wobei in Abhängigkeit des Vergleichs ein elektronisch verarbeitbares Signal erzeugt wird, kann in Abhängigkeit des elektronischen verarbeitbaren Signals automatisiert hinsichtlich des Zustands des Fahrzeugreifens reagiert werden.

Gemäß einer nächsten vorzugsweisen Ausgestaltungsform des erfindungsgemäßen Verfahrens wird ein neuronales Netz bereitgestellt, wobei die Zeitreihenanalyse mittels des neuronalen Netzes durchgeführt wird.

Gemäß einer nächsten vorzugsweisen Ausgestaltungsform des erfindungsgemäßen Verfahrens wird ein Entscheidungsalgorithmus, der auf Entscheidungsbäumen beruht, bereitgestellt, wobei die Zeitreihenanalyse mittels des Entscheidungsalgorithmus durchgeführt wird.

Gemäß einer nächsten vorzugsweisen Ausgestaltungsform des erfindungsgemäßen Verfahrens wird ein Modellalgorithmus, der auf autoregressiven Modellen der gleitenden Mittel beruht, bereitgestellt, wobei die Zeitreihenanalyse mittels des Modellalgorithmus durchgeführt wird.

Gemäß einer nächsten vorzugsweisen Ausgestaltungsform des erfindungsgemäßen Verfahrens handelt es sich bei der Zustandsgröße um eine Temperatur des Fahrzeugreifens, um einen Druck im Inneren des Fahrzeugreifens oder um einen kompensierten Druck im Inneren des Fahrzeugreifens.

Gemäß einer nächsten vorzugsweisen Ausgestaltungsform des erfindungsgemäßen Verfahrens werden die repräsentativen Werte in einer Speichervorrichtung gespeichert.

Gemäß einer nächsten vorzugsweisen Ausgestaltungsform des erfindungsgemäßen Systems, weist das System eine Messvorrichtung auf, wobei die Messvorrichtung zur Anwendung in einem erfindungsgemäßen Verfahren geeignet ist, und das System weist eine Verarbeitungsvorrichtung auf, wobei die Verarbeitungsvorrichtung zur Durchführung einer Zeitreihenanalyse der repräsentativen Werte geeignet ist, und das System weist insbesondere eine Speichervorrichtung auf, wobei die Speichervorrichtung zur Speicherung der repräsentativen Werte geeignet ist.

Gemäß einer nächsten vorzugsweisen Ausgestaltungsform des erfindungsgemäßen Systems weist die Verarbeitungsvorrichtung ein neuronales Netz auf, wobei das neuronale Netz zur Durchführung der Zeitreihenanalyse geeignet ist.

Gemäß einer nächsten vorzugsweisen Ausgestaltungsform des erfindungsgemäßen Systems ist die Verarbeitungsvorrichtung zur Durchführung eines Entscheidungsalgorithmus geeignet. Dabei beruht der Entscheidungsalgorithmus auf Entscheidungsbäumen und ist zur Durchführung der Zeitreihenanalyse geeignet.

Gemäß einer nächsten vorzugsweisen Ausgestaltungsform des erfindungsgemäßen Systems ist die Verarbeitungsvorrichtung zur Durchführung eines Modellalgorithmus geeignet. Dabei beruht der Modellalgorithmus auf autoregressiven Modellen der gleitenden Mittel und ist zur Durchführung der Zeitreihenanalyse geeignet.

Gemäß einer nächsten vorzugsweisen Ausgestaltungsform des erfindungsgemäßen Systems, weisen die Messvorrichtung und die Verarbeitungsvorrichtung weisen insbesondere Übertragungsmittel auf. Die Übertragungsmittel sind dazu vorgesehen, Signale oder Daten von der zwischen der Messvorrichtung und der Verarbeitungsvorrichtung zu übertragen. Die Übertragungsmittel sind vorzugsweise dazu vorgesehen, Signale oder Daten von der zwischen der Messvorrichtung und der Verarbeitungsvorrichtung elektromagnetisch zu übertragen.

Weitere Vorteile, Merkmale und Einzelheiten, auf die die Erfindung in ihrem Umfang nicht beschränkt ist, werden nun anhand der Zeichnung näher beschrieben.

Es zeigt:

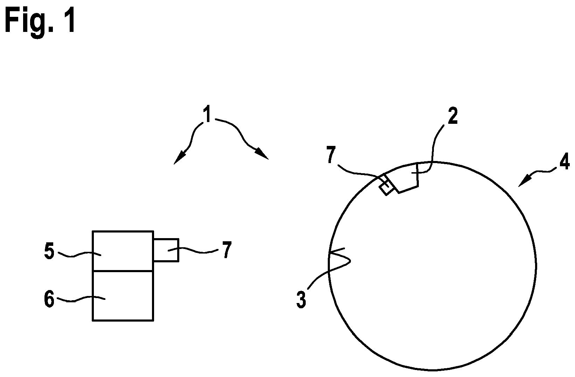

Fig. 1: eine schematische Darstellung eines erfindungsgemäßen Systems.

In der Figur 1 ist ein erfindungsgemäßes System 1 zum Nachweis von Reifenanomalien schematisch dargestellt. Das System 1 ist zur Durchführung eines erfindungsgemäßen Verfahrens geeignet.

Das System 1 weist insbesondere eine Messvorrichtung 2 auf. Die Messvorrichtung 2 ist zur Anwendung in einem erfindungsgemäßen Verfahren geeignet. Bei der Messvorrichtung 2 handelt es sich insbesondere um einen Drucksensor oder um eine Temperatursensor oder um einen Druck- und Temperatursensor. Die Messvorrichtung 2 ist gemäß der in der Figur 1 dargestellten Ausführungsform an einer Reifeninnenfläche 3 eines Fahrzeugreifens 4 angeordnet.

Das System 1 weist ferner insbesondere eine Verarbeitungsvorrichtung 5 auf, wobei die Verarbeitungsvorrichtung 5 zur Durchführung einer Zeitreihenanalyse der repräsentativen Werte geeignet ist.

Das System 1 weist insbesondere eine Speichervorrichtung 6 auf, wobei die Speichervorrichtung 6 zur Speicherung der repräsentativen Werte geeignet ist.

Die Verarbeitungsvorrichtung 5 weist insbesondere ein neuronales Netz auf, wobei das neuronale Netz zur Durchführung der Zeitreihenanalyse geeignet ist.

Die Verarbeitungsvorrichtung 5 ist insbesondere zur Durchführung eines Entscheidungsalgorithmus geeignet, wobei der Entscheidungsalgorithmus auf Entscheidungsbäumen beruht und zur Durchführung der Zeitreihenanalyse geeignet ist.

Die Verarbeitungsvorrichtung 5 ist weiter insbesondere zur Durchführung eines Modellalgorithmus geeignet, wobei der Modellalgorithmus auf autoregressiven Modellen der gleitenden Mittel beruht und zur Durchführung der Zeitreihenanalyse geeignet ist.

Die Messvorrichtung 2 und die Verarbeitungsvorrichtung 5 weisen insbesondere Übertragungsmittel 7 auf. Die Übertragungsmittel 7 sind dazu vorgesehen, Signale oder Daten von der zwischen der Messvorrichtung 2 und der Verarbeitungsvorrichtung 5 zu übertragen. Die Übertragungsmittel 7 sind vorzugsweise dazu vorgesehen, Signale oder Daten von der zwischen der Messvorrichtung 2 und der Verarbeitungsvorrichtung 5 elektromagnetisch zu übertragen.

### Bezugszeichenliste

### (Teil der Beschreibung)

- 1: System
- 2: Messvorrichtung
- 3: Reifeninnenfläche
- 4: Fahrzeugreifen
- 5: Verarbeitungsvorrichtung
- 6: Speichervorrichtung
- 7: Übertragungsmittel

## Patentansprüche

1. Verfahren zum Nachweis von Reifenanomalien, aufweisend die folgenden Schritte:
- Bereitstellen eines Fahrzeugreifens (4);
- Bereitstellen einer Messvorrichtung (2), wobei die Messvorrichtung (2) zur Messung einer Zustandsgröße des Fahrzeugreifens (2) geeignet ist;
- Erfassen von Zeitintervallen in denen Messungen mittels der Messvorrichtung (2) vorgenommen werden;
- Messen einer Zustandsgröße während der Zeitintervalle;
- Zuordnen eines repräsentativen Wertes zu der gemessenen Zustandsgröße;
- Durchführen einer Zeitreihenanalyse der repräsentativen Werte, **dadurch gekennzeichnet, dass** für den Fall, wonach mindestens zweimal während eines Zeitintervalls die Zustandsgröße des Fahrzeugreifens (4) gemessen wird, es sich bei dem repräsentativen Wert um den Mittelwert der während eines Zeitintervalls gemessenen Zustandsgrößen handelt oder es sich bei dem repräsentativen Wert um den Medianwert der während eines Zeitintervalls gemessenen Zustandsgrößen handelt oder es sich bei dem repräsentativen Wert um den Minimalwert der während eines Zeitintervalls gemessenen Zustandsgrößen handelt oder es sich bei dem repräsentativen Wert um den Maximalwert der während eines Zeitintervalls gemessenen Zustandsgrößen handelt, wobei repräsentative Werte lediglich zu während eines Zeitunterintervalls gemessenen Zustandsgrößen zugeordnet werden, wobei es sich bei dem Zeitunterintervall um ein innerhalb des Zeitintervalls liegendes inneres zeitliches Intervall handelt.

2. Verfahren nach dem vorhergehenden Anspruch, **dadurch gekennzeichnet, dass** für jedes Zeitintervall und jede Zustandsgröße mehrere der genannten repräsentativen Werte ermittelt werden.

3. Verfahren nach einem der vorhergehenden Ansprüche, **dadurch gekennzeichnet, dass** das Zeitintervall eine Länge von einer Stunde bis zu 24 Stunden hat.

4. Verfahren nach einem der vorhergehenden Ansprüche, **dadurch gekennzeichnet, dass** der repräsentative Wert mit einem Schwellenwert verglichen wird, wobei in Abhängigkeit des Vergleichs ein elektronisch verarbeitbares Signal erzeugt wird.

5. Verfahren nach einem der vorhergehenden Ansprüche, **dadurch gekennzeichnet, dass** ein neuronales Netz bereitgestellt wird, wobei die Zeitreihenanalyse mittels des neuronalen Netzes durchgeführt wird.

6. Verfahren nach einem der Ansprüche 1 bis 4, **dadurch gekennzeichnet, dass** ein Entscheidungsalgorithmus, der auf Entscheidungsbäumen beruht, bereitgestellt wird, wobei die Zeitreihenanalyse mittels des Entscheidungsalgorithmus durchgeführt wird.

7. Verfahren nach einem der Ansprüche 1 bis 4, **dadurch gekennzeichnet, dass** ein Modellalgorithmus, der auf autoregressiven Modellen der gleitenden Mittel beruht, bereitgestellt wird, wobei die Zeitreihenanalyse mittels des Modellalgorithmus durchgeführt wird.

8. Verfahren nach einem der vorhergehenden Ansprüche, **dadurch gekennzeichnet, dass** es sich bei der Zustandsgröße um eine Temperatur des Fahrzeugreifens (4), um einen Druck im Inneren des Fahrzeugreifens (4) oder um einen kompensierten Druck im Inneren des Fahrzeugreifens (4) handelt.

9. Verfahren nach einem der vorhergehenden Ansprüche, **dadurch gekennzeichnet, dass** die repräsentativen Werte in einer Speichervorrichtung (6) gespeichert werden.

10. System (1) zum Nachweis von Reifenanomalien, wobei das System (1) zur Durchführung eines Verfahrens nach einem der vorhergehenden Ansprüche konfiguriert ist, aufweisend eine Messvorrichtung (2), wobei die Messvorrichtung (2) zur Anwendung in einem erfindungsgemäßen Verfahren nach einem der Ansprüche 1 bis 9 konfiguriert ist, und aufweisend
eine Verarbeitungsvorrichtung (5), wobei die Verarbeitungsvorrichtung (5) zur Durchführung einer Zeitreihenanalyse der repräsentativen Werte geeignet ist, und insbesondere aufweisend eine Speichervorrichtung (6), wobei die Speichervorrichtung (6) zur Speicherung der repräsentativen Werte geeignet ist.

11. System (1) nach dem vorhergehenden Anspruch, **dadurch gekennzeichnet, dass** die Verarbeitungsvorrichtung (5) ein neuronales Netz aufweist, wobei das neuronale Netz zur Durchführung der Zeitreihenanalyse geeignet ist.

12. System (1) nach Anspruch 10 oder Anspruch 11, **dadurch gekennzeichnet, dass** die Verarbeitungsvorrichtung (5) zur Durchführung eines Entscheidungsalgorithmus geeignet ist, wobei der Entscheidungsalgorithmus auf Entscheidungsbäumen beruht und zur Durchführung der Zeitreihenanalyse geeignet ist.

13. System (1) nach einem der Ansprüche 10 bis 12, **dadurch gekennzeichnet, dass** die Verarbeitungsvorrichtung (5) zur Durchführung eines Modellalgorithmus geeignet ist, wobei der Modellalgorithmus auf autoregressiven Modellen der gleitenden Mittel beruht und zur Durchführung der Zeitreihenanalyse geeignet ist.

## Claims

1. Method for detecting tyre anomalies, comprising the following steps:
- providing a vehicle tyre (4);
- providing a measuring device (2), the measuring device (2) being suitable for measuring a state variable of the vehicle tyre (2);
- recording time intervals in which measurements are performed by means of the measuring device (2);
- measuring a state variable during the time intervals;
- assigning a representative value to the measured state variable;
- performing a time series analysis of the representative values,
**characterized in that** if the state variable of the vehicle tyre (4) is measured at least twice during a time interval then the representative value is the mean value of the state variables measured during a time interval or the representative value is the median value of the state variables measured during a time interval or the representative value is the minimum value of the state variables measured during a time interval or the representative value is the maximum value of the state variables measured during a time interval, representative values being assigned only to state variables measured during a time sub-interval, the time sub-interval being an internal time interval within the time interval.

2. Method according to the preceding claim, **characterized in that** multiple instances of said representative values are determined for each time interval and each state variable.

3. Method according to either of the preceding claims, **characterized in that** the time interval has a length of between one hour and 24 hours.

4. Method according to one of the preceding claims, **characterized in that** the representative value is compared with a threshold value, the comparison being taken as a basis for generating an electronically processable signal.

5. Method according to one of the preceding claims, **characterized in that** a neural network is provided, the time series analysis being performed by means of the neural network.

6. Method according to one of Claims 1 to 4, **characterized in that** a decision algorithm based on decision trees is provided, the time series analysis being performed by means of the decision algorithm.

7. Method according to one of Claims 1 to 4, **characterized in that** a model algorithm based on autoregressive models of the moving averages is provided, the time series analysis being performed by means of the model algorithm.

8. Method according to one of the preceding claims, **characterized in that** the state variable is a temperature of the vehicle tyre (4), a pressure in the interior of the vehicle tyre (4) or a compensated pressure in the interior of the vehicle tyre (4).

9. Method according to one of the preceding claims, **characterized in that** the representative values are stored in a memory device (6).

10. System (1) for detecting tyre anomalies, the system (1) being configured for carrying out a method according to one of the preceding claims, comprising a measuring device (2), the measuring device (2) being configured for use in a method according to the invention according to one of Claims 1 to 9, and comprising a processing device (5), the processing device (5) being suitable for performing a time series analysis of the representative values, and in particular comprising a memory device (6), the memory device (6) being suitable for storing the representative values.

11. System (1) according to the preceding claim, **characterized in that** the processing device (5) comprises a neural network, the neural network being suitable for performing out the time series analysis.

12. System (1) according to Claim 10 or Claim 11, **characterized in that** the processing device (5) is suitable for performing a decision algorithm, the decision algorithm being based on decision trees and being suitable for performing the time series analysis.

13. System (1) according to one of Claims 10 to 12, **characterized in that** the processing device (5) is suitable for performing a model algorithm, the model algorithm being based on autoregressive models of the moving averages and being suitable for performing the time series analysis.

## Revendications

1. Procédé de détection d'anomalies de pneus, comprenant les étapes suivantes :
- fourniture d'un pneu de véhicule (4) ;
- fourniture d'un dispositif de mesure (2), le dispositif de mesure (2) étant approprié pour mesurer une grandeur d'état du pneu de véhicule (2) ;
- détection d'intervalles de temps dans lesquels les mesures sont effectuées au moyen du dispositif de mesure (2) ;
- mesure d'une grandeur d'état pendant les intervalles de temps ;
- attribution d'une valeur représentative à la grandeur d'état mesurée ;
- réalisation d'une analyse chronologique des valeurs représentatives,
**caractérisé en ce que**, dans le cas où la grandeur d'état du pneu de véhicule (4) est mesurée au moins deux fois pendant un intervalle de temps, la valeur représentative est la valeur moyenne des grandeurs d'état mesurées pendant un intervalle de temps, ou alors la valeur représentative est la valeur médiane des grandeurs d'état mesurées pendant un intervalle de temps, ou alors la valeur représentative est la valeur minimale des grandeurs d'état mesurées pendant un intervalle de temps, ou alors la valeur représentative est la valeur maximale des grandeurs d'état mesurées pendant un intervalle de temps, des valeurs représentatives étant attribuées uniquement aux grandeurs d'état mesurées pendant un sous-intervalle de temps, le sous-intervalle de temps étant un intervalle de temps interne se trouvant à l'intérieur de l'intervalle de temps.

2. Procédé selon la revendication précédente, **caractérisé en ce que** plusieurs desdites valeurs représentatives sont déterminées pour chaque intervalle de temps et chaque grandeur d'état.

3. Procédé selon l'une des revendications précédentes, **caractérisé en ce que** l'intervalle de temps a une longueur d'une heure à 24 heures.

4. Procédé selon l'une des revendications précédentes, **caractérisé en ce que** la valeur représentative est comparée à une valeur de seuil, un signal pouvant être traité électroniquement étant généré en fonction de la comparaison.

5. Procédé selon l'une des revendications précédentes, **caractérisé en ce qu'**un réseau neuronal est fourni, l'analyse chronologique étant effectuée au moyen du réseau neuronal.

6. Procédé selon l'une des revendications 1 à 4, **caractérisé en ce qu'**un algorithme de décision basé sur des arbres de décision est fourni, l'analyse chronologique étant effectuée au moyen de l'algorithme de décision.

7. Procédé selon l'une des revendications 1 à 4, **caractérisé en ce qu'**un algorithme de modèle qui se base sur des modèles autorégressifs à moyennes mobiles est fourni, l'analyse chronologique étant effectuée au moyen de l'algorithme de modèle.

8. Procédé selon l'une des revendications précédentes, **caractérisé en ce que** la grandeur d'état est une température du pneu de véhicule (4), une pression à l'intérieur du pneu de véhicule (4) ou une pression compensée à l'intérieur du pneu de véhicule (4).

9. Procédé selon l'une des revendications précédentes, **caractérisé en ce que** les valeurs représentatives sont mémorisées dans un dispositif de mémoire (6).

10. Système (1) de détection d'anomalies de pneus, le système (1) étant configuré pour mettre en œuvre un procédé selon l'une des revendications précédentes, possédant un dispositif de mesure (2), le dispositif de mesure (2) est configuré pour être utilisé dans un procédé selon l'invention selon l'une des revendications 1 à 9, et possédant un dispositif de traitement (5), le dispositif de traitement (5) étant approprié pour effectuer une analyse chronologique des valeurs représentatives, et possédant notamment un dispositif de mémoire (6), le dispositif de mémoire (6) étant approprié pour mémoriser les valeurs représentatives.

11. Système (1) selon la revendication précédente, **caractérisé en ce que** le dispositif de traitement (5) possède un réseau neuronal, le réseau neuronal étant approprié pour effectuer l'analyse chronologique.

12. Système (1) selon la revendication 10 ou la revendication 11, **caractérisé en ce que** le dispositif de traitement (5) est approprié pour exécuter un algorithme de décision, l'algorithme de décision étant basé sur des arbres de décision et étant approprié pour effectuer l'analyse chronologique.

13. Système (1) selon l'une des revendications 10 à 12, **caractérisé en ce que** le dispositif de traitement (5) est approprié pour exécuter un algorithme de modèle, l'algorithme de modèle étant basé sur des modèles autorégressifs à moyennes mobiles et étant approprié pour effectuer l'analyse chronologique.
